# EUROPÄISCHE PATENTSCHRIFT

(11) **EP 0 720 725 B1**
(45) Veröffentlichungstag und Bekanntmachung des Hinweises auf die Patenterteilung: **04.04.2001**
(21) Anmeldenummer: 95924180.3
(22) Anmeldetag: 06.07.1995
(51) Int. Cl.: G01F 1/68

(54) **VORRICHTUNG ZUR MESSUNG DER MASSE EINES STRÖMENDEN MEDIUMS**
DEVICE FOR MEASURING THE QUANTITY OF A FLOWING MEDIUM
DISPOSITIF DE MESURE DU DEBIT D'UN MILIEU EN ECOULEMENT

(30) Priorität: 22.07.1994 DE 4426100
(43) Veröffentlichungstag der Anmeldung: 10.07.1996
(73) Patentinhaber: ROBERT BOSCH GMBH, 70442 Stuttgart (DE)
(72) Erfinder: RILLING, Heinz, D-71735 Eberdingen (DE); LEHENBERGER, Stefan, D-71636 Ludwigsburg (DE)
(86) Internationale Anmeldenummer: DE9500886
(87) Internationale Veröffentlichungsnummer: WO9603623

(56) Entgegenhaltungen:
- EP-A- 0 441 523
- FR-A- 2 439 388
- GB-A- 2 044 352
- PATENT ABSTRACTS OF JAPAN vol. 7 no. 75 (P-187) [1220] ,29.März 1983 & JP,A,58 006414 (HITACHI SEISAKUSHO K.K. ) 14.Januar 1983,
- DE 28 45 661 A (in Anmeldung erwähnt, entspricht FR 2 439 388))
- DE 30 07 851 A (in Anmeldung erwähnt, entspricht GB 2 044 352)
- US 3 975 951

## Beschreibung

### Stand der Technik

Die Erfindung geht aus von einer Vorrichtung zur Messung der Masse eines strömenden Mediums nach der Gattung des Anspruchs 1. Es ist schon eine Vorrichtung bekannt (DE-PS 30 07 851), bei der zur Messung der Masse eines strömenden Mediums ein temperaturabhängiges Sensorelement in Form eines Hitzdrahtes in das strömende Medium eingebracht ist. Das Sensorelement ist mittels Sensoranschlußleitungen mit einer elektronischen Regelschaltung verbunden, welche die vom Sensorelement bereitgestellten elektrischen Signale auswertet. Die Vorrichtung hat ein Gehäuse aus Metall, das zur Unterbringung und zur Halterung der Regelschaltung und des Sensorelements dient. Die Regelschaltung ist im Innern des Gehäuses untergebracht, um die elektronische Regelschaltung insbesondere gegen einstrahlende elektromagnetische Wellen zu schützen. Ein derartige Maßnahme zum Schutz elektronischer Schaltungen ist dem Fachmann als sogenannter elektromagnetischer Verträglichkeitsschutz (EMV-Schutz) bekannt, der insbesondere bei Kraftfahrzeugen zunehmend an Bedeutung gewinnt, da Kraftfahrzeuge vermehrt mit elektronischen oder elektrischen Vorrichtungen ausgerüstet werden. Diese Vorrichtungen sind insbesondere im Motorinnenraum in enger Nachbarschaft untergebracht und müssen daher ohne gegenseitige Beeinflussung nebeneinander funktionieren, so daß neben dem Schutz gegen von außen einstrahlende elektromagnetische Wellen auch eine gegenseitige Beeinflussung der Vorrichtungen untereinander ausgeschlossen werden muß. Das im angegebenen Stand der Technik gezeigte Metallgehäuse benötigt jedoch einen erheblichen Bauraum, wobei die Anschlußleitungen von außerhalb des Metallgehäuses zur Regelschaltung geführt sind. Die Anschlußleitungen sind notwendig, um einerseits die von der Regelschaltung bereitgestellten elektrischen Signale abzugreifen und andererseits die Regelschaltung an einer Spannungsquelle anzuschließen. Die Anschlußleitungen sind aber ohne einen Entstörschutz zur Regelschaltung von außen zum Innern des Metallgehäuses geführt, so daß elektromagnetische Wellen über die Anschlußleitungen in Form von Störimpulsen zur Regelschaltung gelangen können und diese in ihrer Funktion beeinträchtigen oder schlimmstenfalls zerstören.

Die DE-PS 28 45 661 zeigt eine Vorrichtung zur Messung der Masse eines strömenden Mediums, insbesondere der Ansaugluftmasse einer Brennkraftmaschine, bei der elektrische Signale eines Sensorelements von einer elektronischen Regelschaltung ausgewertet werden, die eine Vielzahl elektrischer Bauteile besitzt, welche in sogenannter Hybridbauweise zu einer Hybridschaltung zusammengefaßt sind. Die Hybridschaltung ist auf einem Hybridträger als integrierte Schichtschaltung aufgetragen und mittels eines Klebemittels auf ein Grundgehäuse aus Kunststoff angeklebt, ohne daß ein Metallgehäuse zum EMV-Schutz der Regelschaltung vorhanden ist.

Durch Patent Abstracts of Japan, Vol. 7, No. 75(P-187) [1220] (JP-A-58 006 414) beziehungsweise JP-A-58 006 414 ist es bereits bekannt, im Innern eines durch die Saugrohrwandung, einen Deckel und ein Seitenteil gebildeten Abschirmgehäuses, eine Regelschaltung anzuordnen und deren elektrische Anschlußleitungen durch in dem Seitenteil angeordnete Kondensatoren zu führen. Das Sensorelement ist dabei in einem in der Saugrohrwand verlaufenden Bypass angeordnet. Bekannt ist durch die EP-A-0 441 523 ebenfalls eine Vorrichtung zur Messung der Masse eines strömenden Mediums, die zwei Gehäusehälften aus Kunststoff aufweist. Die beiden Gehäusehälften umschließen teilweise einen Aufnahmeraum für eine Regelschaltung, die auf einer den Aufnahmeraum auf einer Bodenseite einer Gehäusehälfte schließenden metallenen Bodenwand sitzt. Weiterhin ist durch die US-A-3 975 951 eine Vorrichtung zur Messung der Masse eines strömenden Mediums unter Verwendung eines temperaturabhängigen Sensorelementes und einer Regelschaltung bekannt, bei der jedoch keine besonderen Vorkehrungen zum EMV-Schutz getroffen sind.

### Vorteile der Erfindung

Die erfindungsgemäße Vorrichtung mit den kennzeichnenden Merkmalen des Anspruchs 1 hat demgegenüber den Vorteil, daß in einfacher Art und Weise ein EMV-Schutz bereitgestellt wird, der insbesondere in Massenherstellung kostengünstig herstellbar ist und der insbesondere den Bauraum der Vorrichtung nicht vergrößert.

Durch die in den Unteransprüchen aufgeführten Maßnahmen sind vorteilhafte Weiterbildungen und Verbesserungen der im Anspruch 1 angegebenen Vorrichtung möglich.

Besonders vorteilhaft ist, daß die erfindungsgemäße Vorrichtung durch ein Steckteil wahlweise mit einem Entstörschutz der Anschlußleitungen oder ohne einen derartigen Schutz herstellbar ist, so daß sich durch eine Modulbauweise die Produktionskosten verringern.

### Zeichnung

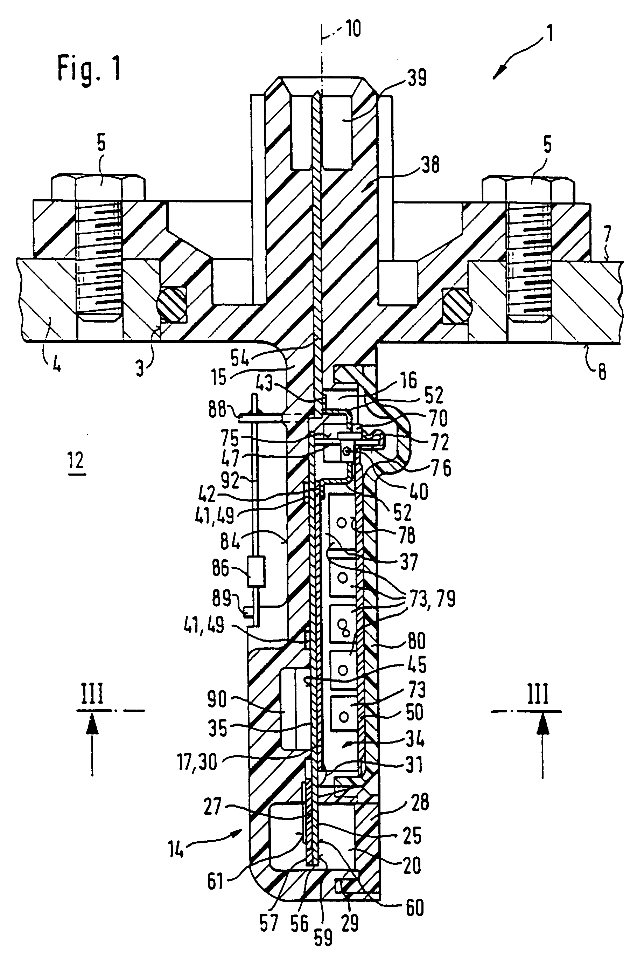

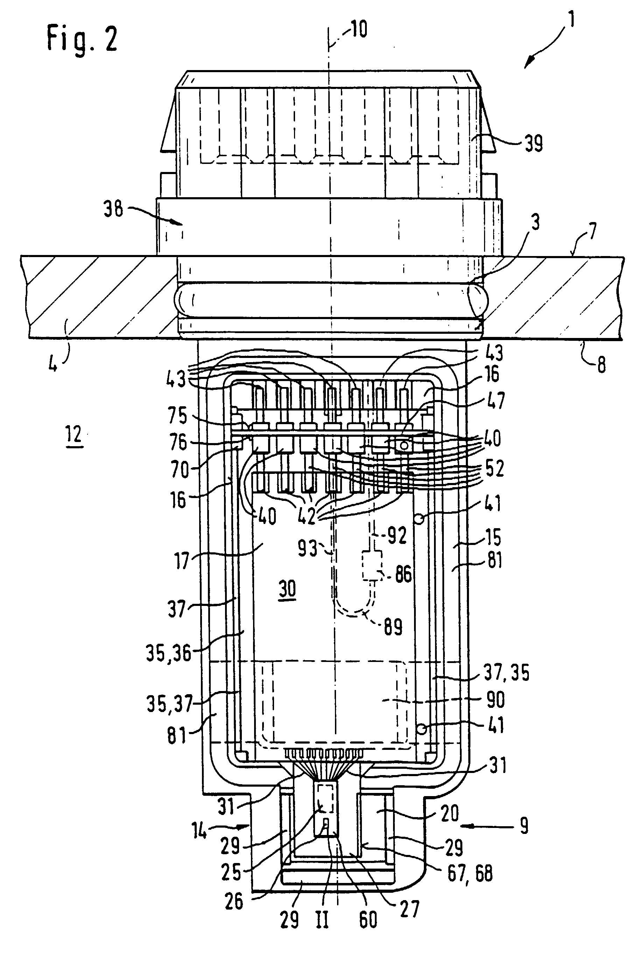

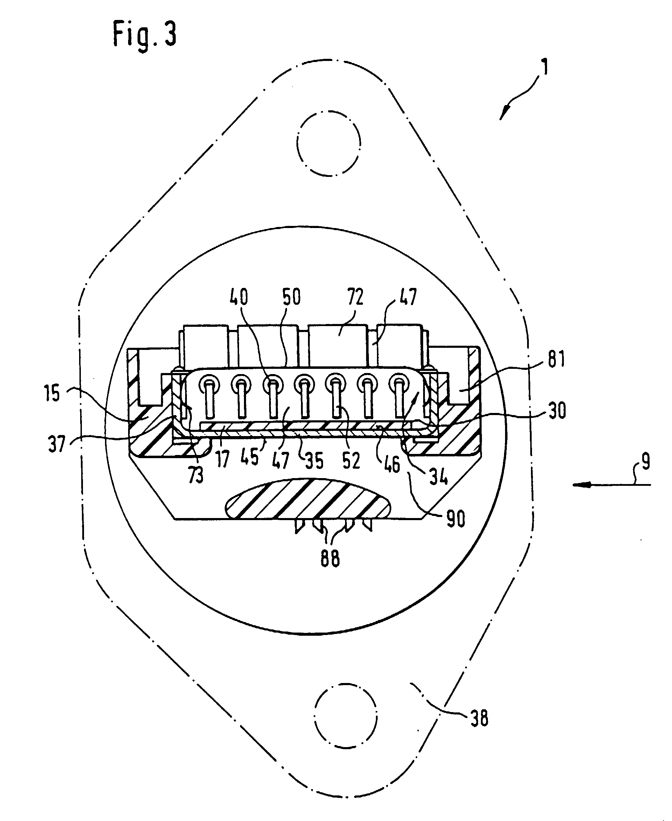

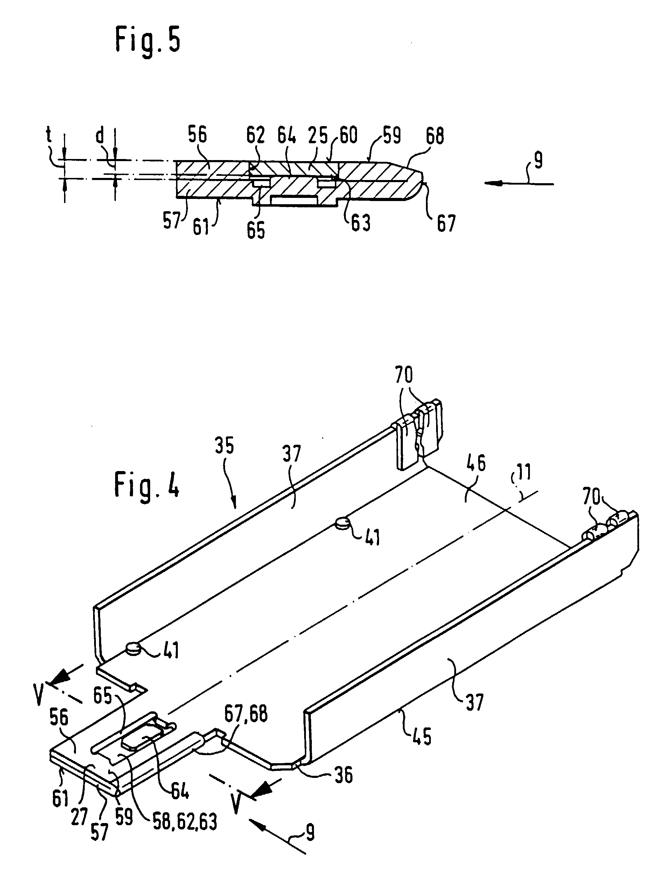

Ein Ausführungsbeispiel der Erfindung ist in der Zeichnung vereinfacht dargestellt und in der nachfolgenden Beschreibung näher erläutert. Es zeigen Figur 1 in Seitenansicht einen Schnitt durch eine erfindungsgemäß ausgestaltete Vorrichtung, Figur 2 eine Draufsicht der erfindungsgemäß ausgestalteten Vorrichtung, Figur 3 einen Schnitt entlang der Linie III-III in Figur 1, Figur 4 eine perspektivische Einzeldarstellung eines Gehäusebodenteils der erfindungsgemäß ausgestalteten Vorrichtung, Figur 5 einen Schnitt entlang einer Linie V-V in Figur 4.

### Beschreibung des Ausführungsbeispiels

Die in Figur 1 in Seitenansicht dargestellte, erfindungsgemäße Vorrichtung 1 ist zur Messung der Masse eines strömenden Mediums, insbesondere der Ansaugluftmasse einer nicht näher dargestellten Brennkraftmaschine vorgesehen. Die Vorrichtung 1 hat vorzugsweise eine schlanke zylindrische Form, die sich entlang einer mittig durch die Vorrichtung 1 hindurchgehenden Längsachse 10 erstreckt. Die Vorrichtung 1 ist durch eine Öffnung 3 einer Wandung 4, beispielsweise eines Ansaugrohres hindurchgeführt, in dem von der Brennkraftmaschine aus der Umgebung angesaugte Luft strömt. Mittels zweier Schraubverbindungen 5 ist die Vorrichtung 1 an einer Außenfläche 7 der Wandung 4 steckbar befestigt, die mit einer Innenfläche 8 einen Strömungsquerschnitt 12 begrenzt, in dem senkrecht zur Zeichenebene der Figur 1 und in die Zeichenebene hinein das Medium strömt. Die Vorrichtung 1 besitzt ein langgestrecktes Grundgehäuse 15 aus Kunststoff, an dessen freiem Endbereich 14 ein Meßkanal 20 ausgebildet ist, der mit einem etwa rechteckförmigen Querschnitt etwa in die Mitte des Strömungsquerschnitts 12 hineinragt und sich etwa parallel zur Strömungsrichtung erstreckt, um vom strömenden Medium durchströmt zu werden. Innerhalb des Meßkanals 20 ist in Richtung der Längsachse 10 ein Sensorelement 25 untergebracht, das eine plattenförmige Form besitzt und das mit seiner größten Oberfläche 60 in etwa parallel zum in die Zeichenebene der Figur 1 hineinströmenden Medium ausgerichtet ist. Die Strömungsrichtung des Mediums ist in den Figuren 2 bis 5 durch entsprechende Pfeile 9 gekennzeichnet und verläuft dort von rechts nach links. Der Meßkanal 20 wird teils vom Grundgehäuse 15 und teils von einem auf das Grundgehäuse 15 aufsetzbaren, beispielsweise aus Kunststoff hergestellten Verschlußdeckel 28 begrenzt, der in eine am Endbereich 14 des Grundgehäuses 15 vorgesehene Nut 29 einsteckbar ist. Der Verschlußdeckel 28 ist der besseren Übersicht wegen in der Figur 2 nicht dargestellt.

Das Sensorelement 25 kann durch Ausätzen eines Halbleiterkörpers, beispielsweise eines Siliziumwafers, in sogenannter mikromechanischer Bauweise hergestellt werden und besitzt einen Aufbau, der zum Beispiel der DE-OS 42 19 454 entnehmbar ist und der deshalb nicht näher geschildert wird. Das Sensorelement 25 hat einen ebenfalls durch Ausätzen entstandenen, membranförmigen Sensorbereich 26, der, wie in der Figur 2, einer Draufsicht der Vorrichtung 1, dargestellt ist, von einer eingezeichneten Linie II begrenzt wird. Der Sensorbereich 26 hat eine Dicke, die nur wenige Mikrometer beträgt und besitzt mehrere, ebenfalls durch Ausätzen entstandene Widerstandsschichten, die wenigstens einen temperaturabhängigen Meßwiderstand und beispielsweise wenigstens einen Heizwiderstand bilden. Es ist auch möglich, das Sensorelement 25 als sogenanntes Heißfilm-Sensorelement vorzusehen, dessen Aufbau beispielsweise der DE-OS 36 38 138 entnehmbar ist. Derartige Heißfilm-Sensorelemente besitzen ebenfalls auf einem plattenförmigen Substrat aufgebrachte, einzelne Widerstandsschichten, die wenigstens einen temperaturabhängigen Meßwiderstand und beispielsweise wenigstens einen Heizwiderstand umfassen.

Zwischen dem Meßkanal 20 und einem außerhalb des Strömungsquerschnitts 12 am anderen Ende des Grundgehäuses 15 gelegenen Anschlußteil 38 der Vorrichtung 1 ist im Grundgehäuse 15 in einer Grundgehäuseausnehmung 16 eine elektronische Regelschaltung 30 untergebracht, die, wie in der Figur 2 dargestellt ist, mittels beispielsweise in Form von Bonddrähten ausgebildeten Sensoranschlußleitungen 31 mit dem Sensorelement 25 elektrisch verbunden ist. Die Regelschaltung 30 dient bekannterweise zur Versorgung des Sensorelements 25 und zur Auswertung der vom Sensorelement 25 gelieferten elektrischen Signale. Der Aufbau einer derartigen Regelschaltung 30 ist dem Fachmann hinlänglich bekannt und kann beispielsweise der DE-OS 36 38 138 entnommen werden. Die Regelschaltung 30 hat eine Vielzahl elektrischer Bauteile, die üblicherweise in sogenannter Hybridbauweise zu einer Hybridschaltung zusammengefaßt sind. Die Regelschaltung 30 ist in einem metallenen Schutzgehäuse 34 untergebracht, das aus einem metallenen Gehäusebodenteil 35 und einem metallenen Gehäuseverschlußteil 50 besteht, die miteinander verbindbar sind. Die Hybridschaltung ist auf einem Hybridträger 17 als integrierte Schichtschaltung aufgetragen und im Ausführungsbeispiel an eine Oberseite 46 einer zum Beispiel rechteckförmigen Grundwand 36 des metallenen Gehäusebodenteils 35, beispielsweise mittels eines Klebemittels angeklebt.

Das in der Figur 4 in perspektivischer Einzeldarstellung ohne Sensorelement 25 gezeigte Gehäusebodenteil 35 kann aus einem dünnen Metallstreifen, beispielsweise einem Metallblech hergestellt werden, wobei sich zur Bearbeitung des Metallstreifens Stanz-, Biege-, Falz-, Tiefzieh- oder Prägeverfahren eignen. Ebenfalls kann das Gehäuseverschlußteil 50 aus einem Metallstreifen mittels Stanz-, Biege-, Falz-, Tiefzieh, oder Prägeverfahren hergestellt werden. Die Grundwand 36 des Gehäusebodenteils 35 hat zum Beispiel eine etwa rechteckförmige Form, an dessen Oberseite 46 der Hybridträger 17 angeklebt ist. An den längeren Seiten der rechteckförmigen Grundwand 36 stehen jeweils senkrecht von dieser umgebogene, parallel zueinander verlaufende Seitenwände 37 ab, die zur Halterung des zwischen beide Seitenwände 37 des Gehäusebodenteils 35 einsetzbaren, metallenen Gehäuseverschlußteils 50 (Figur 1) dienen. An einer Unterseite 45 der Grundwand 36 besitzt das Gehäusebodenteil 35 beispielsweise vier herausgeprägte, abstehende Haltezapfen 41, die beim Einsetzen des Gehäusebodenteils 35 in die Grundgehäuseausnehmung 16 des Grundgehäuses 15 in korrespondierend ausgenommene Löcher 49 des Grundgehäuses 15 eingreifen, um so das Gehäusebodenteil 35 am Grundgehäuse 15 beispielsweise steckbar zu befestigen. Anstelle oder zusätzlich zu den Haltezapfen 41 des Gehäusebodenteils 35 ist es auch möglich, das Gehäusebodenteil 35 mittels eines Klebemittels mit dem Grundgehäuse 15 zu verkleben.

Wie in der Figur 4 dargestellt ist, besitzt das Gehäusebodenteil 35 eine zungenförmige Verlängerung an einer kurzen Seite der rechteckförmigen Grundwand 36, die als Sensorträger 27 ausgebildet zur Halterung des Sensorelements 25 vorgesehen ist. Der Sensorträger 27 und das Gehäusebodenteil 35 können in einem gemeinsamen Herstellungsprozeß, wie in der Figur 4 dargestellt, oder auch jeweils einzeln hergestellt werden, wofür sich Stanz-, Biege-, Falt-, Tiefzieh- und Prägeverfahren eignen. Nach der beispielsweise erfolgten Einzelherstellung des Sensorträgers 27 und des Gehäusebodenteils 35 können beide Teile wieder durch geeignete Verbindungsmittel, beispielsweise Laserschweißen, verbunden werden. Der Sensorträger 27 wird in jedem Fall durch Falten eines dünnen Metallstreifens hergestellt. Bei dem in Figur 4 dargestellten Ausführungsbeispiel wird aus der rechteckförmigen, zungenförmigen Verlängerung der Grundwand 36 mittig zu einer Schutzgehäuselängsachse 11 eine Öffnung 62 beispielsweise durch Stanzen ausgenommen. Danach wird um eine parallel zur Schutzgehäuselängsachse 11 liegenden Biegeachse ein Teil der zungenförmigen Verlängerung derart gebogen, daß im Endzustand des gebogenen Metallstreifens etwa zwei gleich große Elemente 56, 57 aneinander anliegen. Im folgenden wird das aus einer Ebene der Grundwand 36 gebogene Element als Halteelement 57 und das in der Ebene verbleibende, nicht gebogene Element mit der Öffnung 62 als Rahmenelement 56 bezeichnet. Dabei erstreckt sich das Halteelement 57 unterhalb der Unterseite 45. Wie in der Figur 5, einem Schnitt entlang einer Linie V-V in Figur 4 mit eingebrachtem Sensorelement 25, dargestellt ist, bedeckt das Halteelement 57 im fertig gebogenen Zustand von etwa 180 Grad die Öffnung 62 des nicht gebogenen Rahmenelements 56, um gemeinsam mit dem Halteelement 57 eine Ausnehmung 58 zu begrenzen. Das Rahmenelement 56, beziehungsweise die Ausnehmung 58 hat einen Querschnitt, welcher in etwa der beispielsweise rechteckförmigen, plattenförmigen Form des Sensorelements 25 entspricht und eine Tiefe t, die größer ist als eine quer zur Strömung 9 gemessene Dicke d des Sensorelements 25, um so das Sensorelement 25 vollständig in der Ausnehmung 58 aufzunehmen. Nach dem Falten des Metallstreifens wird das Halteelement 57 mittels eines an einer Außenfläche 61 des Halteelements 57 angreifenden Werkzeugs, beispielsweise eines Prägewerkzeugs verformt, so daß eine verformte Teilfläche einer von der Ausnehmung 58 des Rahmenelements 56 begrenzten Bodenfläche 63 des Halteelements 57 in Form einer plateauförmigen Erhebung 64 etwas in die Ausnehmung 58 des Rahmenelements 56 ragt. Die im Bereich der Öffnung 62 des Rahmenelements 56 ausgebildete, plateauförmige Erhebung 64 hat einen kleineren Querschnitt als ein Querschnitt der Öffnung 62 und des auf die Erhebung 64 aufgesetzten Sensorelements 25. Beim Prägevorgang ist es außerdem möglich, eine oder mehrere Klebsicken 65 in der Bodenfläche 63 auszubilden, die sich rinnenförmig in der Bodenfläche 63, beispielsweise um die plateauförmige Erhebung 64 herum erstrecken. Danach wird beispielsweise durch Prägen eine entlang der Biegeachse verlaufende und eine der Strömungsrichtung 9 zugewandte Seitenfläche 67 des Sensorträgers 27 derart verformt, daß eine um die Biegeachse abgerundete und zur Oberfläche 59 hin abgeflachte Anströmkante 68 erzielt wird. Durch die abgerundete und gegebenenfalls keilförmige Anströmkante 68 erfolgt eine gleichmäßige Anströmung entlang des Sensorelements 25 insbesondere ohne Wirbel- oder Ablösegebiete an der Oberfläche 60 des Sensorelements 25. Auf die plateauförmige Erhebung 64 ist ein Klebemittel aufgetragen, auf welche das Sensorelement 25 in der Ausnehmung 58 aufgesetzt und durch welche das Sensorelement 25 außerhalb seines Sensorbereichs 26 gehalten wird. Dabei kann sich beim Klebvorgang überschüssig aufgetragenes Klebemittel in den aus der Bodenfläche 63 ausgenommenen Klebsicken 65 ansammeln, um das Sensorelement 25 mit gleichbleibender Klebschichtdicke an der plateauförmigen Erhebung 64 anzukleben. Da die Ausarbeitung der plateauförmigen Erhebung 64 erst nach dem Falten des Metallstreifens erfolgt, ist es zudem möglich, diese mit äußerst geringer Toleranz herzustellen, so daß das Sensorelement 25 mit höchster Präzision bündig mit seiner Oberfläche 60 zur Oberfläche 59 des Rahmenelements 56 in die Ausnehmung 58 einklebbar ist. Die Ausbildung der plateauförmigen Erhebung 64 ist derart gestaltet, daß die plateauförmige Erhebung 64 den Sensorbereich 26 des Sensorelements 25 nicht überdeckt, so daß das Sensorelement 25 nur außerhalb seines Sensorbereichs 26 angeklebt wird, wodurch das Sensorelement 25 mit dem Sensorbereich 26 frei und ohne Kontakt zur Bodenfläche 63 in der Ausnehmung 58 untergebracht ist. Hierdurch ergibt sich durch ein Luftpolster zwischen dem Sensorelement 25 und der Bodenfläche 63 eine gute thermische Wärmeisolation des Sensorelements 25 im Halteelement 57. Darüber hinaus ist der Querschnitt der Ausnehmung 58 in Strömungsrichtung 9 etwas größer bemessen als der Querschnitt des Sensorelements 25, so daß sich zwischen dem Sensorelement 25 und der Wandung der Ausnehmung 58 herum ein Luftspalt ergibt, der eine gute thermische Wärmeisolation des Sensorelements 25 im Rahmenelement 56 ermöglicht. Die Höhe der plateauförmigen Erhebung 64 ist so gewählt, daß sich zwischen der Oberfläche 59 des Rahmenelements 56 und der Oberfläche 60 des Sensorelements 25 keine Stufe ergibt.

Zur elektrischen Verbindung der Hybridschaltung am Hybridträger 17 mit einer am Anschlußteil 38 der Vorrichtung 1 ausgebildeten, elektrischen Steckverbindung 39 sind mehrere Anschlußleitungen 54 vorgesehen, die, wie in der Figur 2 dargestellt ist, von der Steckverbindung 39 bis nach außerhalb des Gehäusebodenteils 35 führen und deren Enden Kontaktstellen 43 im Grundgehäuse 15 bilden. Mittels in U-Form gebogener, beispielsweise von Drähten gebildeten Hybridanschlußleitungen 52 sind die Kontaktstellen 43 mit entsprechenden Kontaktstellen 42 des Hybridträgers 17 elektrisch verbunden. Die Hybridanschlußleitungen 52 werden von außen durch einzelne Durchführkondensatoren 40 hindurch in das Innere des Gehäusebodenteils 35 zum Hybridträger 17 geführt und an ihren jeweiligen Drahtenden mit den Kontaktstellen 42 des Hybridträgers 17 und mit den Kontaktstellen 43 im Grundgehäuse 15, beispielsweise durch Löten oder Laserschweißen, elektrisch kontaktiert. Die einzelnen Durchführkondensatoren 40 sind in einem gemeinsamen Steckteil 47 in vorgesehenen Öffnungen untergebracht und dort beispielsweise durch eine Lötverbindung gehalten und mit dem Steckteil 47 elektrisch verbunden. Zum Einbau des Steckteils 47 in das Gehäusebodenteil 35 sind jeweils an den Seitenwänden 37 des Gehäusebodenteils 35 beispielsweise zwei Federelemente 70 vorgesehen, zwischen denen das Steckteil 47 zwischen die Seitenwände 37 des Gehäusebodenteils 35 steckbar eingeführt wird, wonach das Steckteil 47 eine der Steckverbindung 39 zugewandte, metallene Vorderwand des Gehäusebodenteils 35 bildet. Die Federelemente 70 werden bei der Herstellung des Gehäusebodenteils 35 in einem Stanz- und Biegevorgang an den Seitenwänden 37 ins Innere des Gehäusebodenteils 35 weisend mit angeformt. Beim Herstellen des Steckteils 47 wird dieses mit den einzelnen, rohrförmigen Durchführkondensatoren 40 bestückt, wonach die Hybridanschlußleitungen 52 in die Durchführkondensatoren 40 eingeführt und beispielsweise durch eine Lötverbindung gehalten und elektrisch kontaktiert werden. Danach können die Hybridanschlußleitungen 42 in U-Form gebogen werden, so daß das Steckteil 47 in einfacher Art und Weise als separates Steckmodul in das Gehäusebodenteil 35 eingeschoben und von den Federelementen 70 gehalten wird, wobei sich über die Federelemente 70 eine Masseverbindung vom Steckteil 47 zum Gehäusebodenteil 35 ergibt. Nach dem Einsetzen des Steckteils 47 können die Hybridanschlußleitungen 52 an ihren jeweiligen Drahtenden an den Kontaktstellen 42 des Hybridträgers 17 und an den Kontaktstellen 43 im Grundgehäuse 15, beispielsweise durch Löten oder Bonden, elektrisch kontaktiert werden. Von den am Grundgehäuse 15 vorgesehenen Kontaktstellen 43 führen die elektrischen Anschlußleitungen 54 innerhalb des Grundgehäuses 15 zur Steckverbindung 39, die im Ausführungsbeispiel beispielsweise als Steckeranschluß ausgebildet ist. Zur elektrischen Verbindung der Regelschaltung 30 wird ein elektrischer Stecker auf den Steckeranschluß aufgesetzt, der mit einem nicht dargestellten, elektronischen Steuergerät verbunden ist, das die von der Regelschaltung 30 bereitgestellten, elektrischen Signale auswertet, um damit beispielsweise eine Motorleistungssteuerung der Brennkraftmaschine durchzuführen.

Das Gehäuseverschlußteil 50 ist zur Abdeckung des Gehäusebodenteils 35 und des Hybridträgers 17 vorgesehen und umgreift, wie in der Figur 1 dargestellt ist, das Steckteil 47 mit spangenartig ausgebildeten Federelementen 72. Die Federelemente 72 bedecken dabei nur teilweise eine der Steckverbindung 39 zugewandte Vorderfläche 75 und eine dem Hybridträger 17 zugewandte Rückfläche 76 des Steckteils 47, um durch einen federnden Kontakt eine Masseverbindung vom Gehäuseverschlußteil 50 zum Steckteil 47 und von diesem über die Federelemente 70 zum Gehäusebodenteil 35 zu erhalten. Darüber hinaus besitzt das Gehäuseverschlußteil 50 an seinen zwei längeren Seiten seiner rechteckförmigen Grundfläche 78 zwei abstehende Seitenwände 79, die zum Beispiel mittels mehrerer Schlitze in mehrere Federelemente 73 unterteilt sind. Die Federelemente 73 werden beim Herstellen des Gehäuseverschlußteils 50 zum Beispiel etwas nach außen verspreizt, so daß diese, wie in der Figur 3, einer Schnittdarstellung entlang einer Linie III-III, dargestellt ist, im montierten Zustand nach dem Einsetzen des Gehäuseverschlußteils 50 in das Gehäusebodenteil 35 an den Seitenwänden 37 des 35 federnd anliegen.

Das aus Gehäusebodenteil 35, Gehäuseverschlußteil 50 und beispielsweise Steckteil 47 gebildete Schutzgehäuse 34 umgibt die Hybridschaltung allseits, um die Regelschaltung 30 insbesondere gegen einstrahlende elektromagnetische Wellen zu schützen. Das mit den Durchführkondensatoren 40 bestückte Steckteil 47 stellt dabei sicher, daß über die Anschlußleitungen 54 und die Hybridanschlußleitungen 52 keine elektromagnetischen Wellen zur Hybridschaltung gelangen, sondern von den Durchführkondensatoren 40 ausgefiltert werden. Darüber hinaus wird durch das metallene Gehäusebodenteil 35 und das metallene Gehäuseverschlußteil 50 ein Abstrahlen elektromagnetischer Wellen vermieden, die von der Regelschaltung 30 ausgehen können, so daß auch in unmittelbarer Nähe der Vorrichtung 1 angeordnete, elektrische Systeme unbeeinflußt von der Vorrichtung 1 arbeiten können.

Aus Verschmutzungsgründen ist das Gehäuseverschlußteil 50 noch von einer aus Kunststoff hergestellten Abdeckung 80 bedeckt, die, wie in der Figur 1 dargestellt ist, zum Beispiel in eine um die Grundgehäuseausnehmung 16 umlaufende Nut 81 des Grundgehäuses 35 einsteckbar ist. Die Abdeckung 80 ist der besseren Übersicht wegen in der Figur 2 nicht dargestellt. Zur Kompensation des Meßwertes des Sensorelements 25 bezüglich der Temperatur des strömenden Mediums besitzt die Vorrichtung 1 einen Widerstand, der im folgenden als Mediumtemperaturwiderstand 86 bezeichnet wird. Der Mediumtemperaturwiderstand 86 ist zum Beispiel ein Teil der Regelschaltung 30, die gewährleistet, daß sich Änderungen der Temperatur des strömenden Mediums nicht auf die Meßgenauigkeit des Vorrichtung 1 auswirken. Es ist auch möglich, anstelle oder zusätzlich zur elektrischen Verbindung des Mediumtemperaturwiderstandes 86 mit der Regelschaltung 30, den Mediumtemperaturwiderstand 86 mittels einer elektrischen Anschlußleitung im Grundgehäuse 15 und eines zusätzlichen Kontaktpins in der Steckverbindung 39 von dem auf die Steckverbindung 39 aufsetzbaren Stecker separat zu kontaktieren, so daß dieser auch mit weiteren Steuerungsschaltungen der Brennkraftmaschine, beziehungsweise mit dem elektronischen Steuergerät, verbunden werden kann. Der Mediumtemperaturwiderstand 86 hat einen von der Temperatur abhängigen Widerstandswert. Dabei kann der Mediumtemperaturwiderstand 86 als NTC- oder PTC-Widerstand ausgebildet sein und beispielsweise einen Widerstand in Form eines Drahtes, eines Films oder einer Folie aufweisen. Der Mediumtemperaturwiderstand 86 ist außerhalb des Meßkanals 20 an einer in etwa parallel zur Längsachse 10 verlaufenden Außenfläche 84 des Grundgehäuses 15 mit Abstand zur Außenfläche 84 angeordnet. Dabei erstreckt sich das Grundgehäuse 15 im Bereich des Mediumtemperaturwiderstandes 86 senkrecht zur Längsachse 10 auf seiner dem Mediumtemperaturwiderstand 86 zugewandten Seite nur bis zur Außenfläche 84. Der außerhalb des Grundgehäuses 15 untergebrachte Mediumtemperaturwiderstand 86 hat zur elektrischen Kontaktierung nebeneinander angeordnete Anschlußdrähte 92, 93, von denen wenigstens einer 93 in U-Form so gebogen ist, daß er teilweise parallel zum anderen Anschlußdraht 92 verläuft. Die Anschlußdrähte 92, 93 sind an zwei in Form von Kontaktstiften ausgebildeten, elektrischen Halterungen 88 beispielsweise durch Löten befestigt und mit den Anschlußdrähten 92, 93 elektrisch verbunden. Die Halterungen 88 ragen etwa gegenüberliegend dem Steckteil 47 des Gehäusebodenteils 35 aus der Außenfläche 80 des Grundgehäuses 15 in den Strömungsquerschnitt 12 heraus und liegen in Strömungsrichtung 9 hintereinander. Zur weiteren Halterung des Mediumtemperaturwiderstandes 86 ist am Grundgehäuse 15 eine von der Außenfläche 84 abstehende Kunststoffnase 89 vorgesehen, um welche der wenigstens eine gebogene Anschlußdraht 93 an einer den Halterungen 88 abgewandten Seite der Kunststoffnase 89 in einer Nut verläuft, so daß der Mediumtemperaturwiderstand 86 durch die Anschlußdrähte 92, 93 mit Abstand zur Außenfläche 84 des Grundgehäuses 15 im strömenden Medium angeordnet ist. Das Anbringen des Mediumtemperaturwiderstandes 86 außerhalb des Meßkanals 20 am Grundgehäuse 15 bietet den Vorteil, daß durch einen räumlichen Abstand des Mediumtemperaturwiderstandes 86 einerseits zum Sensorelement 25 und andererseits zur Hybridschaltung des Hybridträgers 17 eine thermische Beeinflussung des Mediumtemperaturwiderstandes 86 ausgeschlossen ist. Außerdem ist der Mediumtemperaturwiderstand 86 außerhalb des Grundgehäuses 15 keiner Strömungsbeeinflussung ausgesetzt, die beispielsweise von Begrenzungswänden des Meßkanals 20 ausgeht, so daß dieser ungestört die Temperatur des strömenden Mediums annehmen kann.

Wie in der Figur 3 dargestellt ist, ist zwischen dem Meßkanal 20 und der Kunststoffnase 89 ein in Strömungsrichtung 9 verlaufender Kühlkanal 90 vorgesehen, der zur Kühlung der Regelschaltung 30 dient und der die thermische Entkopplung des Mediumtemperaturwiderstandes 86 einerseits zum Sensorelement 25 und andererseits zur Regelschaltung 30 weiter verbessert. Der Kühlkanal 90 erstreckt sich in etwa parallel zur Strömungsrichtung 9 des strömenden Mediums, quer durch das rundgehäuse 15 hindurch, wobei die Unterseite 45 des Gehäusebodenteils 35 teilweise vom Kunststoff des Grundgehäuses 15 befreit ist. Durch die teilweise kunststofffreie Unterseite 45 kann die von der Regelschaltung 30 abgegebene Wärme über den Hybridträger 17 zum Gehämusebodenteil 35 und zum Kühlkanal 90 abfließen, wodurch eine Erwärmung des Sensorelements 25 und des Mediumtemperaturwiderstandes 86 durch von der Regelschaltung 30 abgegebener Wärme vermieden wird. Der Kühlkanal 90 hat zum Beispiel einen etwa rechteckförmigen Eintrittsquerschnitt, der sich in Strömungsrichtung 9 zur Mitte der Vorrichtung 1 zu einem kleinsten Querschnitt verjüngt und sich weiter in Strömungsrichtung 9 wieder vergrößert, um mit einem rechteckförmigen Austrittsquerschnitt, dessen Größe dem Eintrittsquerschnitt entspricht, zu enden. Die Ausbildung des Kühlkanals 90 gewissermaßen in Form einer halbseitigen Lavaldüse bewirkt, daß das strömende Medium vom Eintrittsquerschnitt zur Unterseite 45 des Gehäusebodenteils 35 hin beschleunigt wird, um durch eine vergrößerte Geschwindigkeit an der Unterseite 45 des Gehäusebodenteils 35 die Wärmeabfuhr von der Regelschaltung 30 zum strömenden Medium zu erhöhen.

## Patentansprüche

1. Vorrichtung zur Messung der in einem durch ein Ansaugrohr begrenzten Strömungsquerschnitt (12) strömenden Ansaugluftmasse einer Brennkraftmaschine, mit einem in die strömende Ansaugluft (9) eingebrachten, temperaturabhängigen Sensorelement (25), das mit einer Regelschaltung (30) verbunden ist, die zum elektromagnetischen Verträglichkeitsschutz (EMV-Schutz) von einem metallenen Schutzgehäuse (34) umgeben ist, wobei die Vorrichtung (1) ein Grundgehäuse (15) hat, das sich von der Wandung des Ansaugrohr ausgehend in den Strömungsquerschnitt (12) erstreckt und in dem Grundgehäuse (15) innerhalb des Strömungsquerschnittes (12) das Schutzgehäuse (34) angeordnet ist, das aus einem separaten metallenen Gehäusebodenteil (35), einem separaten metallenen Gehäuseverschlußteil (50) sowie einem separaten metallenen Steckteil (47) besteht und daß das Gehäusebodenteil (35) eine Grundwand (36) und zwei Seitenwände (37) hat, die senkrecht von der Grundwand(36) abstehen und zwischen den beiden Seitenwänden (37) das Steckteil (47) und das Gehäuseverschlußteil (50) eingesetzt ist.

2. Vorrichtung nach Anspruch 1, dadurch gekennzeichnet, daß das Steckteil (47) Durchführkondensatoren (40) hat, durch die hindurch elektrische Anschlußleitungen (52) geführt sind.

3. Vorrichtung nach Anspruch 2, dadurch gekennzeichnet, daß das Steckteil (47) mittels Federelementen (70) am Gehäusebodenteil (35) gehalten ist.

4. Vorrichtung nach Anspruch 1, dadurch gekennzeichnet, daß das Gehäuseverschlußteil (50) Federelemente (72, 73) besitzt, die zur Verbindung mit dem Steckteil (47) und dem Gehäusebodenteil (35) an diesem angreifen.

5. Vorrichtung nach Anspruch 1, dadurch gekennzeichnet, daß die Regelschaltung (30) am Gehäusebodenteil (35) des Schutzgehäuses (34) angebracht ist.

6. Vorrichtung nach Anspruch 5 dadurch gekennzeichnet, daß an der Grundwand (36) des Gehäusebodenteils (35) des Schutzgehäuses (34) ein Sensorträger (27) zur Aufnahme des Sensorelements (25) ausgebildet ist.

7. Vorrichtung nach Anspruch 1, dadurch gekennzeichnet, daß das Grundgehäuse (15) aus Kunststoff ausgebildet ist.

## Claims

1. Apparatus for measuring the intake air mass of an internal combustion engine flowing in a flow cross section (12) bounded by an intake pipe, having a temperature-dependent sensor element (25), which is introduced into the flowing intake air (9) and is connected to a control circuit (30) which, for electromagnetic compatibility protection (EMC protection), is surrounded by a metal protective housing (34), in which case the apparatus (1) has a base housing (15) which, proceeding from the wall of the intake pipe, extends into the flow cross section (12) and the protective housing (34) is arranged in the base housing (15) within the flow cross section (12), the said protective housing comprising a separate metal housing bottom part (35), a separate metal housing closure part (50) and also a separate metal plug-in part (47), and in which case the housing bottom part (35) has a base wall (36) and two side walls (37), which project perpendicularly from the base wall (36), and the plug-in part (47) and the housing closure part (50) are inserted between the two side walls (37).

2. Apparatus according to Claim 1, characterized in that the plug-in part (47) has bushing capacitors (40), through which electrical connecting lines (52) are led.

3. Apparatus according to Claim 2, characterized in that the plug-in part (47) is held by means of spring elements (70) on the housing bottom part (35).

4. Apparatus according to Claim 1, characterized in that the housing closure part (50) has spring elements (72, 73), which, for connection to the plug-in part (47) and the housing bottom part (35), engage on the latter.

5. Apparatus according to Claim 1, characterized in that the control circuit (30) is fitted on the housing bottom part (35) of the protective housing (34).

6. Apparatus according to Claim 5, characterized in that a sensor carrier (27) for accommodating the sensor element (25) is formed on the base wall (36) of the housing bottom part (35) of the protective housing (34).

7. Apparatus according to Claim 1, characterized in that the base housing (15) is formed from plastic.

## Revendications

1. Dispositif de mesure d'une masse d'air aspiré par un moteur à combustion interne à travers une section d'écoulement (12) limitée dans une tubulure d'aspiration, comprenant
un élément capteur (25) sensible à la température, venant dans l'air aspiré (9) qui s'écoule, ce capteur étant relié à un circuit de régulation (30) entouré par un boîtier protecteur métallique (34) pour assurer la compatibilté électromagnétique (protection électromagnétique),
le dispositif (1) ayant un boîtier de base (15) venant en saillie dans la section d'écoulement (12) en partant de la paroi de la tubulure d'aspiration et logeant, à l'intérieur de la section d'écoulement (12), le boîtier protecteur (34) formé d'une pièce de fond métallique, distincte (35), d'une pièce de fermeture métallique distincte (50), ainsi que d'une pièce d'enfichage métallique distincte (47), et
la pièce de fond (35) possèdant une paroi de base (36) et deux parois latérales (37) perpendiculaires à la paroi de base (36),
la pièce d'enfichage (47) et la pièce de fermeture (50) étant placées entre les deux parois latérales (37).

2. Dispositif selon la revendication 1,
caractérisé en ce que
la pièce d'enfichage (47) comporte des condensateurs de passage (40) traversés par des lignes électriques (52).

3. Dispositif selon la revendication 2,
caractérisé en ce que
la pièce d'enfichage (47) est tenue sur la pièce de fond (35) par des éléments à ressort (70).

4. Dispositif selon la revendication 1,
caractérisé en ce que
la pièce de fermeture (50) possède des éléments élastiques (72, 73) pour la liaison avec la pièce d'enfichage (47) et agissant sur celle-ci avec la pièce de fond (35).

5. Dispositif selon la revendication 1,
caractérisé en ce que
le circuit de régulation (30) est fixé à la pièce de fond (35) du boîtier protecteur (34).

6. Dispositif selon la revendication 5,
caractérisé en ce que
la paroi de base (36) de la pièce de fond (35) du boîtier protecteur (34) est réalisée en forme de support de capteurs (27) pour recevoir l'élément de capteur (25).

7. Dispositif selon la revendication 1,
caractérisé en ce que
le boîtier de base (15) est en matière plastique.
